# EUROPÄISCHE PATENTSCHRIFT

(11) **EP 4 610 505 B1**
(45) Veröffentlichungstag und Bekanntmachung des Hinweises auf die Patenterteilung: **22.04.2026**
(21) Anmeldenummer: 25155905.0
(22) Anmeldetag: 05.02.2025
(51) Int. Cl.: F16B 45/02

(54) **KARABINERHAKEN**
CARABINER
MOUSQUETON

(30) Priorität: 21.02.2024 AT 272024
(43) Veröffentlichungstag der Anmeldung: 03.09.2025
(73) Patentinhaber: ABA Hörtnagl GmbH, 6166 Fulpmes, Medraz (AT)
(72) Erfinder: Hörtnagl, Andreas, 6166 Fulpmes (AT)
(74) Vertreter: Torggler & Hofmann Patentanwälte - Rankweil

(56) Entgegenhaltungen:
- DE-U1- 202011 103 255

## Beschreibung

Die vorliegende Erfindung betrifft einen Karabinerhaken mit einem hakenförmigen Grundkörper und einem Schließhebel und einem Arretierteil und einem Betätigungshebel, wobei der hakenförmige Grundkörper eine Aufnahmeöffnung des Karabinerhakens teilweise umschließt und der Schließhebel mittels einer Schließhebelschwenkachse zwischen einer Schließstellung und einer maximalen Offenstellung verschwenkbar am hakenförmigen Grundkörper gelagert ist, wobei die Aufnahmeöffnung in der Schließstellung vom Schließhebel nach außen hin verschlossen und in der maximalen Offenstellung maximal nach außen hin geöffnet ist, wobei der Schließhebel vom Arretierteil in der Schließstellung arretierbar ist und der Schließhebel mittels des, am hakenförmigen Grundkörper mittels einer Betätigungshebelschwenkachse schwenkbar gelagerten, Betätigungshebels von der Schließstellung in die maximale Offenstellung verschwenkbar ist und der Betätigungshebel mittels eines in einem Betätigungslangloch geführten Betätigungsbolzens zum Verschwenken auf den Schließhebel einwirkt.

Karabinerhaken sind beim Stand der Technik in unterschiedlichsten Ausgestaltungsformen bekannt. Bei Karabinerhaken, welche vorrangig zum Einsatz bei Klettersteigen vorgesehen sind, gibt es im Stand der Technik den Hinweis, dass der Schließhebel möglichst lang ausgebildet sein soll, um zu vermeiden, dass die zum Betätigen des Schließhebels benötigten Finger mit einem Stahlseil, in das der Karabinerhaken eingehakt werden soll, in Berührung kommen. Solche Vorschläge sind z.B. aus der AT 511 633 B1 bekannt.

Es gibt im Stand der Technik aber auch bereits Ansätze Karabinerhaken zusätzlich zum Schließhebel mit einem Betätigungshebel auszurüsten, wobei der Betätigungshebel den Schließhebel verschwenkt, wenn der Benutzer mit seinen Fingern den Betätigungshebel verschwenkt. Solche Karabinerhaken sind z.B. aus der DE 10 2010 027 153 A1 bekannt. Hier befinden sich der Schließhebel und der Betätigungshebel auf einander gegenüberliegenden Seiten des hakenförmigen Grundkörpers des Karabinerhakens.

Gattungsgemäße Karabinerhaken, bei denen zusätzlich auch noch ein Arretierteil vorhanden ist, sind in den Fig. 4 und 5 der DE 10 2010 027 153 A1 gezeigt, wobei in Fig. 5 das Arretierteil als Druckknopf und in Fig. 4 als schwenkbarer Hebel ausgebildet sind. Einen weiteren gattungsgemäßen Karabinerhaken zeigt die DE 20 2011 103255 U1.

Aufgabe der Erfindung ist es, einen gattungsgemäßen Karabinerhaken dahingehend weiterzubilden, dass er möglichst einfach zu betätigen ist.

Hierzu schlägt die Erfindung einen Karabinerhaken gemäß Patentanspruch 1 vor.

Es ist somit erfindungsgemäß vorgesehen, dass zumindest in der Schließstellung ein Abstand des Betätigungsbolzens von der Betätigungshebelschwenkachse zumindest dreimal, vorzugsweise zumindest fünfmal, größer ist als ein Abstand des Betätigungsbolzens von der Schließhebelschwenkachse.

Ein Grundgedanke der Erfindung ist es somit, den Abstand zwischen dem Betätigungsbolzen und der Betätigungshebelschwenkachse deutlich größer auszubilden als den Abstand zwischen Betätigungsbolzen und der Schließhebelschwenkachse, wobei dies zumindest in der Schließstellung des Schließhebels, vorzugsweise aber in allen Stellungen des Schließhebels gilt. Hierdurch wird erreicht, dass der Betätigungshebel nur um einen relativ kleinen Winkel um die Betätigungshebelschwenkachse geschwenkt werden muss, um den Schließhebel von der Schließstellung in die maximale Offenstellung zu schwenken. Erfindungsgemäße Karabinerhaken können daher relativ einfach betätigt werden, da der Betätigungshebel zum vollständigen Verschwenken des Schließhebels nur relativ geringfügig bewegt werden muss.

Mittels der Erfindung wird also eine relativ gute Übersetzung zwischen der Schwenkbewegung des Betätigungshebels um die Betätigungshebelschwenkachse und der dadurch erzeugten Schwenkbewegung des Schließhebels um die Schließhebelschwenkachse erreicht.

Bevorzugte Ausgestaltungsformen der Erfindung sehen in diesem Zusammenhang auch vor, dass beim Verschwenken des Betätigungshebels um einen Betätigungshebelschwenkwinkel ein dadurch hervorgerufener Schließhebelschwenkwinkel des Schließhebels zumindest sechsmal, vorzugsweise zumindest siebenmal, so groß ist wie der Betätigungshebelschwenkwinkel.

Eine sehr intuitive und für den Benutzer von Karabinerhaken gewohnte Art der Betätigung wird dann erreicht, wenn, wie bei bevorzugten Ausgestaltungsformen der Erfindung vorgesehen, die Betätigungshebelschwenkachse und die Schließhebelschwenkachse auf einer ersten Seite des hakenförmigen Grundkörpers angeordnet sind und das Arretierteil auf einer, der ersten Seite gegenüberliegenden, zweiten Seite des hakenförmigen Grundkörpers am hakenförmigen Grundkörper befestigt ist. Hierdurch kann der Karabinerhaken also auf der Seite zum Verschwenken des Schließhebels betätigt werden, auf der sich der Schließhebel selbst auch befindet. Man könnte auch davon sprechen, dass sich die Betätigungsfläche des Betätigungshebels auf der ersten Seite des hakenförmigen Grundkörpers befindet, auf der sich auch die Schließhebelschwenkachse befindet. Die Betätigungsfläche ist dabei die Oberfläche des Betätigungshebels, auf die der Benutzer beim Betätigen mit seinen Fingern drückt. Hierdurch kann der Bediener des Karabinerhakens auf der Seite den Schließhebelmechanismus betätigen, auf der sich auch der Schließhebel befindet, so wie er dies auch von einfachen Ausgestaltungsformen von Karabinerhaken, welche gar keinen Betätigungshebel aufweisen, kennt. Man könnte auch davon sprechen, dass der Betätigungshebel und der Schließhebel zumindest in der Schließstellung auf der ersten Seite des hakenförmigen Grundkörpers angeordnet sind und das Arretierteil auf einer, der ersten Seite gegenüberliegenden, zweiten Seite des hakenförmigen Grundkörpers am hakenförmigen Grundkörper befestigt ist.

Bevorzugte Ausgestaltungsformen der Erfindung sehen in diesem Zusammenhang vor, dass der Karabinerhaken in einer Richtung längserstreckt ist und die erste Seite und die zweite Seite bezüglich einer gedachten, in Richtung der Längserstreckung verlaufenden Längsmittelachse einander gegenüber liegen.

Wie aus dem Stand der Technik an sich bekannt ist, kann das Arretierteil auch bei erfindungsgemäßen Karabinerhaken als ein Schieber oder als ein Druckknopf ausgebildet sein. Bevorzugte Varianten der Erfindung sehen aber vor, dass das Arretierteil ein, am hakenförmigen Grundkörper mittels einer Arretierteilschwenkachse, schwenkbar gelagerter Arretierhebel ist. Besonders bevorzugte Varianten sehen dabei wiederum vor, dass die Arretierteilschwenkachse auf der zweiten Seite des hakenförmigen Grundkörpers angeordnet ist. Bei diesen Varianten befinden sich die Betätigungshebelschwenkachse und die Schließhebelschwenkachse somit auf der ersten Seite des hakenförmigen Grundkörpers und die Arretierteilschwenkachse auf der gegenüberliegenden zweiten Seite des hakenförmigen Grundkörpers.

Günstig ist es auch, wenn bei Ausführungsformen der Erfindung vorgesehen ist, dass der Schließhebel in der Schließstellung an einem frei auskragenden Ende des hakenförmigen Grundkörpers anliegt und der Schließhebel zumindest in der Schließstellung zwischen dem frei auskragenden Ende des hakenförmigen Grundkörpers und dem Betätigungshebel angeordnet ist. Es kann auch vorgesehen sein, dass der Schließhebel in der Schließstellung an dem frei auskragenden Ende des hakenförmigen Grundkörpers anliegt und die Schließhebelschwenkachse zwischen dem frei auskragenden Ende des hakenförmigen Grundkörpers und der Betätigungshebelschwenkachse angeordnet ist. Auch dies vereinfacht die intuitive Bedienbarkeit des Karabinerhakens.

Grundsätzlich könnte der Betätigungsbolzen am Schließhebel und das Betätigungslangloch am Betätigungshebel angeordnet bzw. ausgebildet sein. Bevorzugte Varianten der Erfindung sehen aber vor, dass der Betätigungsbolzen am Betätigungshebel fixiert und das Betätigungslangloch am Schließhebel angeordnet, vorzugsweise ausgebildet, ist. Um den Kraftaufwand zum Betätigen des Betätigungshebels beim Verschwenken des Schließhebels von der Schließstellung in die maximale Offenstellung möglichst gering zu halten, ist es günstig, wenn die Reibung zwischen dem Betätigungsbolzen und den, das Betätigungslangloch begrenzenden, Wänden möglichst gering gehalten wird. Dies kann z.B. dadurch erreicht werden, dass eine maximale Verschiebestrecke des Betätigungsbolzens im Betätigungslangloch, um welche der Betätigungsbolzen beim Verschwenken des Schließhebels von seiner Schließstellung in seine maximale Offenstellung verschoben wird, möglichst klein gehalten wird. In diesem Sinne sehen bevorzugte Ausgestaltungsformen der Erfindung vor, dass der Betätigungsbolzen einen, in dem Betätigungslangloch gemessenen, Durchmesser aufweist, und eine maximale Verschiebestrecke des Betätigungsbolzens im Betätigungslangloch höchstens zweimal so groß ist wie der Durchmesser des Betätigungsbolzens, vorzugsweise kleiner ist als der Durchmesser des Betätigungsbolzens. Hierdurch wird erreicht, dass der Betätigungsbolzen im Betätigungslangloch nur über eine ganz kleine maximale Verschiebestrecke bewegt wird, sodass auch nur sehr wenig Reibungsverluste auftreten können.

Bevorzugt ist vorgesehen, dass das Arretierteil mittels eines Arretierbolzens zum Arretieren auf den Schließhebel einwirkt. Ist das Arretierteil ein um eine Arretierteilschwenkachse schwenkbarer Arretierhebel, so ist günstigerweise vorgesehen, dass der Arretierbolzen und die Arretierteilschwenkachse voneinander beabstandet angeordnet sind. Auch dies gilt zumindest in der Schließstellung des Schließhebels, günstigerweise aber in allen Stellungen des Schließhebels. Eine besonders stabile Arretierung des Schließhebels durch das Arretierteil wird dann erreicht, wenn der Arretierbolzen beim Arretieren des Schließhebels am hakenförmigen Grundkörper abgestützt ist.

Bevorzugte Ausgestaltungsformen der Erfindung sehen vor, dass der Karabinerhaken zusätzlich ein Blockierteil zum Blockieren des Arretierteils aufweist, wobei das vom Blockierteil blockierte Arretierteil den Schließhebel in der Schließstellung arretiert. Bei solchen Karabinerhaken ist dann also zusätzlich zum Arretierteil noch ein Blockierteil vorgesehen. Blockiert das Blockierteil das Arretierteil, so ist noch einmal zusätzlich abgesichert, dass das Arretierteil den Schließhebel in der Schließstellung arretiert und nicht aus Versehen den Schließhebel freigeben kann. Auch das Blockierteil könnte grundsätzlich als ein, um eine Blockierteilschwenkachse schwenkbarer Blockierhebel ausgebildet sein. Bevorzugte Varianten der Erfindung sehen aber vor, dass das Blockierteil ein verschiebbar gelagerter Blockierschieber ist. Bevorzugt ist dabei vorgesehen, dass der Blockierschieber am hakenförmigen Grundkörper verschiebbar gelagert ist. Besonders bevorzugt ist vorgesehen, dass das Blockierteil, vorzugsweise am hakenförmigen Grundkörper, zwischen zwei Endstellungen hin und her bewegbar gelagert ist. Es kann vorgesehen sein, dass das Blockierteil in den Endstellungen einrastet.

Um den Karabinerhaken gegen Abrieb an Stahlseilen und dergleichen zu schützen, sehen bevorzugte Ausgestaltungsformen der Erfindung vor, dass der hakenförmige Grundkörper in einem, an die Aufnahmeöffnung angrenzenden Bereich zumindest bereichsweise mit einer Polymerschicht überzogen ist. Mit dieser Polymerschicht, welche auch auswechselbar am hakenförmigen Grundkörper befestigt sein kann, kann als weiterer Effekt auch eine deutliche Geräuschreduktion beim Gleiten des Karabinerhakens entlang von Stahlseilen und dergleichen erzielt werden.

Weitere Merkmale und Einzelheiten bevorzugter Ausgestaltungsformen der Erfindung werden exemplarisch anhand eines Ausführungsbeispiels im Nachfolgenden erläutert. In den

Figuren zeigen:
- Fig. 1: ein Ausführungsbeispiel eines erfindungsgemäßen Karabinerhakens in einer Schließstellung des Schließhebels, wobei das Arretierteil von einem Blockierteil blockiert ist;
- Fig. 2: denselben Karabinerhaken wie Fig. 1 in der Schließstellung, wobei das Blockierteil das Arretierteil allerdings frei gibt und
- Fig. 3: denselben Karabinerhaken wie in Fig. 1, allerdings in der maximalen Offenstellung des Schließhebels;
- Fig. 4: einen Längsschnitt zu Fig. 1;
- Fig. 5: einen Längsschnitt zu Fig. 2;
- Fig. 6: einen Längsschnitt zu Fig. 3;
- Fig. 7: einen vergrößerten Teilbereich aus Fig. 4;
- Fig. 8: eine Schemazeichnung zum Verhältnis von Betätigungshebelschwenkwinkel und Schließhebelschwenkwinkel bei diesem Karabinerhaken und
- Fig. 9: einen vergrößerten Teilbereich aus Fig. 6.

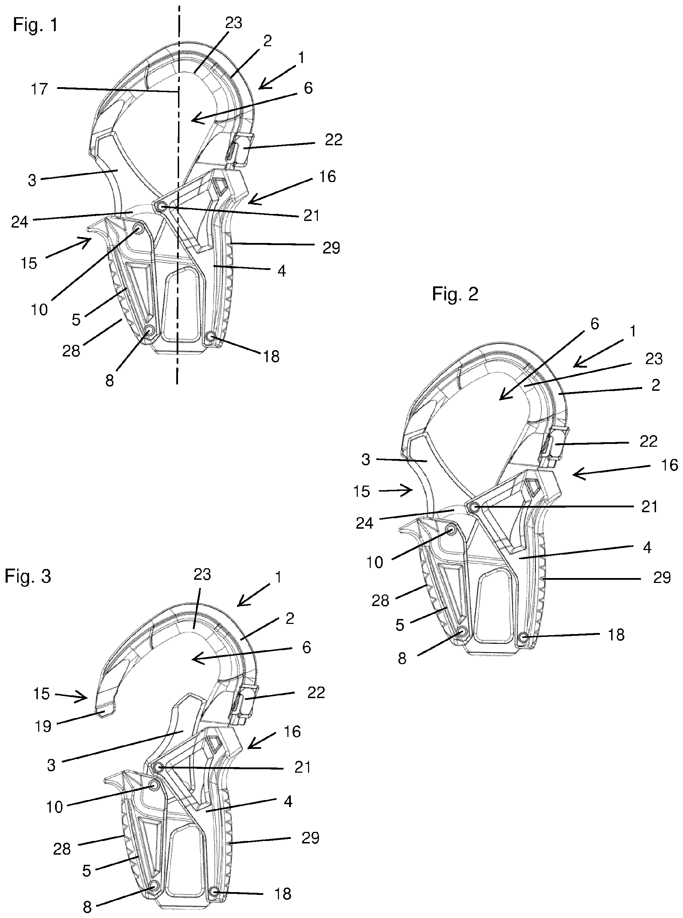

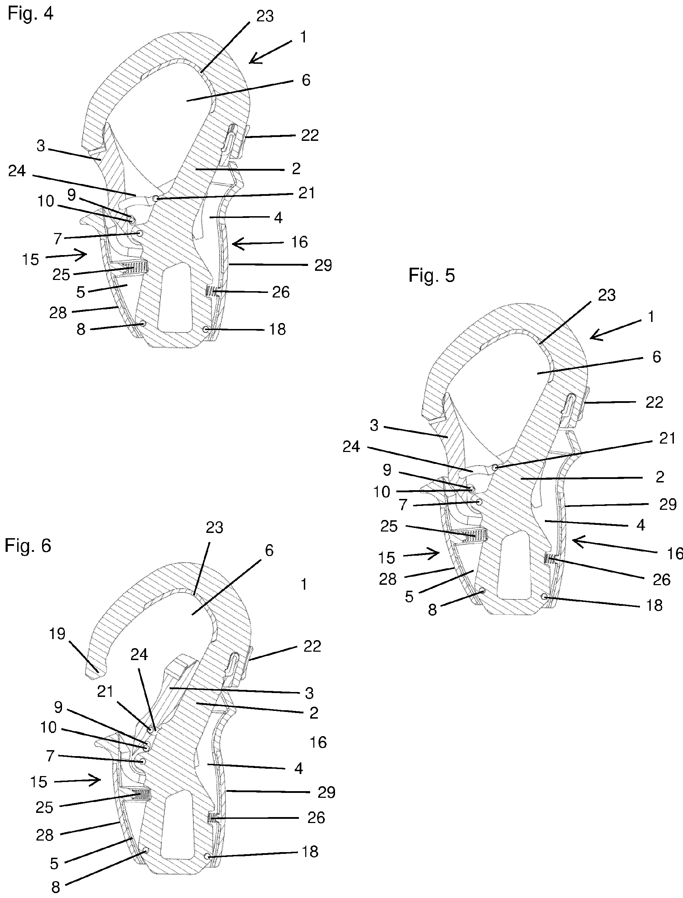

Alle Fig. 1 bis 9 zeigen Darstellungen zu ein und demselben Ausführungsbeispiel eines erfindungsgemäßen Karabinerhakens 1. Die Fig. 1 bis 3 zeigen Seitenansichten, die Fig. 4 bis 6 Schnittdarstellungen, wobei Fig. 4, Fig. 1 zugeordnet ist. Fig. 5 zeigt den Schnitt in der Stellung entsprechend zu Fig. 2 und Fig. 6 den Schnitt entsprechend Fig. 3.

Der Karabinerhaken 1 dieses Ausführungsbeispiels weist einen hakenförmigen Grundkörper 2, einen Schließhebel 3, ein Arretierteil 4 sowie einen Betätigungshebel 5 auf. Das Arretierteil 4 ist in diesem Ausführungsbeispiel als Arretierhebel ausgeführt. Der hakenförmige Grundkörper 2 umschließt bereichsweise bzw. teilweise die Aufnahmeöffnung 6 des Karabinerhakens 1. Wird der Karabinerhaken 1 in ein Seil, einen Bolzen oder dergleichen eingehakt, so befindet sich das Seil bzw. der Bolzen in der Aufnahmeöffnung 6, wie dies an sich bekannt ist. Der Schließhebel 3 ist mittels seiner Schließhebelschwenkachse 7 zwischen einer in den Fig. 1, 2, 4 und 5 dargestellten Schließstellung und der in den Fig. 3 und 6 dargestellten maximalen Offenstellung verschwenkbar am hakenförmigen Grundkörper 2 gelagert. In seiner Schließstellung verschließt der Schließhebel 3 die Aufnahmeöffnung 6 nach außen hin. In der maximal offenen Stellung ist die Aufnahmeöffnung 6 nach außen hin so weit wie möglich geöffnet, sodass der Karabinerhaken 1 an einem nicht dargestellten Seil oder einem Bolzen oder dergleichen eingehakt werden kann. Der Schließhebel 3 ist vom Arretierteil 4, hier also vom Arretierhebel in der Schließstellung arretierbar. Das bedeutet, dass, wenn das Arretierteil 4 den Schließhebel 3 in der Schließstellung festhält, der Schließhebel 3 nicht aus der Schließstellung heraus geschwenkt werden kann.

Während es bei den meisten Karabinerhaken, welche auf dem Markt bekannt sind, üblich ist, zum Verschwenken des Schließhebels von seiner Schließstellung in die maximale Offenstellung direkt auf den Schließhebel zu drücken, ist hier bei diesem erfindungsgemäßen Ausführungsbeispiel vorgesehen, dass der Schließhebel 3 über einen Betätigungshebel 5 von seiner Schließstellung in die maximale Offenstellung verschwenkt wird. Der Betätigungshebel 5 ist mittels der Betätigungshebelschwenkachse 8 am hakenförmigen Grundkörper 2 schwenkbar gelagert. Die Übertragung der Bewegung vom Betätigungshebel 5 auf den Schließhebel 3 erfolgt mittels eines in einem Betätigungslangloch 9 geführten Betätigungsbolzens 10.

In diesem Ausführungsbeispiel ist vorgesehen, dass der Betätigungsbolzen 10 am Betätigungshebel 5 fixiert ist und das Betätigungslangloch 9 am Schließhebel 3 ausgebildet ist. Dies sieht man besonders gut in den Schnittdarstellungen gemäß der Fig. 4 bis 6.

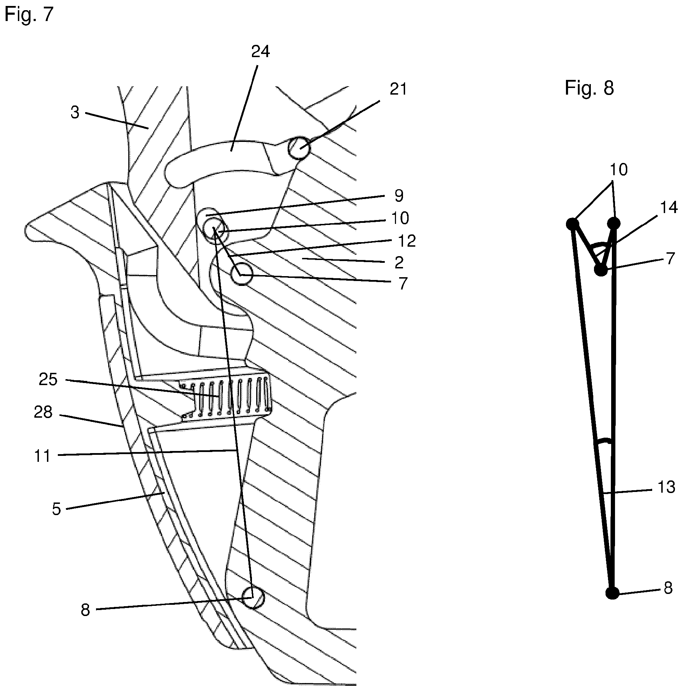

In den Fig. 4 bis 6 und vor allem in Fig. 7 sieht man gut, dass der Abstand 11 des Betätigungsbolzens 10 von der Betätigungshebelschwenkachse 8 deutlich größer ist als der Abstand 12 des Betätigungsbolzens 10 von der Schließhebelschwenkachse 7. Dies gilt zunächst einmal in der Schließstellung, siehe Fig. 4, 5 und 7. Dies gilt in bevorzugten Ausgestaltungsformen aber in allen Stellungen des Schließhebels und insbesondere auch in der maximalen Offenstellung gemäß Fig. 6.

Fig. 7 zeigt einen Ausschnitt von Fig. 4 vergrößert. Hier sind die Abstände 11 zwischen dem Betätigungsbolzen 10 und der Betätigungshebelschwenkachse 8 sowie der Abstand 12 zwischen Betätigungsbolzen 10 und der Schließhebelschwenkachse 7 eingezeichnet. Erfindungsgemäß ist auch bei diesem Ausführungsbeispiel vorgesehen, dass zumindest in der Schließstellung der Abstand 11 des Betätigungsbolzens 10 von der Betätigungshebelschwenkachse 8 zumindest dreimal, vorzugsweise zumindest fünfmal, größer ist als der Abstand 12 des Betätigungsbolzens 10 von der Schließhebelschwenkachse 7. Im gezeigten, wie auch in anderen bevorzugten Ausgestaltungsformen der Erfindung ist es sogar so, dass der genannte Abstand 11 mehr als sechsmal so groß ist wie der genannte Abstand 12. Hierdurch wird, wie eingangs bereits erläutert, ein besonders gutes Übersetzungsverhältnis beim Verschwenken des Schließhebels 3 erreicht.

Um den Schließhebel 3 von der Schließstellung in die maximale Offenstellung zu verschwenken, reicht bereits ein relativ kleiner Betätigungshebelschwenkwinkel 13 aus, um den für das vollständige Öffnen des Schließhebels 3 benötigten Schließhebelschwenkwinkel 14 zu erzielen. Fig. 8 zeigt für dieses Ausführungsbeispiel eines erfindungsgemäßen Karabinerhakens 1 nur die Schließhebelschwenkachse 7 und die Betätigungshebelschwenkachse 8, sowie den Betätigungsbolzen 10 in seinen beiden Endstellungen. Die in Fig. 8 links dargestellte Endstellung nimmt der Betätigungsbolzen 10 in der Schließstellung des Schließhebels 3 ein. Die auf der rechten Seite dargestellte Position des Betätigungsbolzens 10 entspricht seiner relativen Lage zur Schließhebelschwenkachse 7 und zur Betätigungshebelschwenkachse 8 in der maximalen Offenstellung des Schließhebels 3. Eingezeichnet sind in Fig. 8 entsprechend auch der Betätigungshebelschwenkwinkel 13 und der entsprechende Schließhebelschwenkwinkel 14. Wie eingangs bereits erläutert, ist günstigerweise, wie auch in diesem Beispiel ausgeführt, vorgesehen, dass beim Verschwenken des Betätigungshebels 5 um den Betätigungshebelschwenkwinkel 13 ein dadurch hervorgerufener Schließhebelschwenkwinkel 14 des Schließhebels 3 zumindest sechsmal, vorzugsweise zumindest siebenmal so groß ist, wie der Betätigungshebelschwenkwinkel 13.

In bevorzugten Ausgestaltungsformen, wie der hier realisierten, ist vorgesehen, dass die Betätigungshebelschwenkachse 8 und die Schließhebelschwenkachse 7 auf einer ersten Seite 15 des hakenförmigen Grundkörpers 2 angeordnet sind. Das Arretierteil 4 hingegen ist in bevorzugten Ausgestaltungsformen auf einer, der ersten Seite 15 gegenüberliegenden zweiten Seite 16 des hakenförmigen Grundkörpers 2 am hakenförmigen Grundkörper 2 befestigt. Dies sieht man gut in den Fig. 1 bis 6. In Fig. 1 ist auch die Längsmittelachse 17 dieses in einer entsprechenden Richtung längserstreckten Karabinerhakens 1 dargestellt. Man sieht gut, dass die erste Seite 15 und die zweite Seite 16 bezüglich der gedachten, in Richtung der Längserstreckung des Karabinerhakens 1 verlaufenden Längsmittelachse 17 einander gegenüber liegen. In bevorzugten Ausgestaltungsformen, wie der hier gezeigten, ist es dann günstigerweise auch so, dass sich die Betätigungsfläche 28 des Betätigungshebels 5, auf welche der Benutzer des Karabinerhakens 1 zum Verschwenken des Betätigungshebels 5 drückt, auf der ersten Seite 15 des Karabinerhakens 1 befindet. Die Betätigungsfläche 29 des Arretierteils 4 bzw. des Arretierhebels, auf die gedrückt werden muss, um den Arretierhebel zu verschwenken, befindet sich günstigerweise aber auf der gegenüberliegenden zweiten Seite 16, so wie dies hier auch realisiert ist. Entsprechend befindet sich in diesem Ausführungsbeispiel auch die Arretierteilschwenkachse 18, um die das Arretierteil 4, hier der Arretierhebel schwenkbar ist, auf der zweiten Seite 16 des hakenförmigen Grundkörpers 2.

In den Fig. 1 bis 6 sieht man auch gut, dass der Schließhebel 3 in der Schließstellung an einem frei auskragenden Ende 19 des hakenförmigen Grundkörpers 2 anliegt. Der Schließhebel 3 befindet sich somit zwischen dem frei auskragenden Ende 19 und dem Betätigungshebel 5. Weiters ist auch bei diesem Ausführungsbeispiel vorgesehen, dass die Schließhebelschwenkachse 7 zwischen dem frei auskragenden Ende 19 des hakenförmigen Grundkörpers 2 und der Betätigungshebelschwenkachse 8 angeordnet ist.

Während das Verschwenken sowohl des Betätigungshebels 5 als auch des Arretierteils 4 bzw. hier des Arretierhebels durch Drücken auf die entsprechenden Betätigungsflächen 28 und 29 erfolgt, ist für die Rückstellung dieser Hebel 4 und 5 jeweils eine, am hakenförmigen Grundkörper 2 abgestützte Rückstellfeder 25 bzw. 26 vorgesehen. Wird vom Benutzer die Betätigungsfläche 28 des Betätigungshebels 5 losgelassen, so drückt die erste Rückstellfeder 25 den Betätigungshebel 5 wieder in seine Ausgangsstellung gemäß der Fig. 1, 2, 4 und 5. Mittels der Kopplung über das Betätigungslangloch 9 und den Betätigungsbolzen 10 sorgt diese Rückstellung des Betätigungshebels 5 auch dafür, dass der Schließhebel 3 mittels der ersten Rückstellfeder 25 wieder von der maximalen Offenstellung gemäß der Fig. 3 und 6 automatisch in die Schließstellung gemäß der Fig. 1, 2, 4 und 5 zurückgeschwenkt wird, wenn die Betätigungsfläche 28 des Betätigungshebels 5 entsprechend losgelassen wird. Die zweite Rückstellfeder 26 sorgt für eine entsprechende Rückstellung des als Arretierhebel ausgeführten Arretierteils 4, wenn die Betätigungsfläche 29 entsprechend losgelassen wird.

Der Betätigungshebel 5 kann erst dann zum Schwenken des Schließhebels 3 in seine maximalen Offenstellung betätigt werden, wenn das Arretierteil 4, hier in Form des Arretierhebels den Schließhebel 3 frei gibt. Für die Kopplung zwischen Arretierteil 4 und Schließhebel 3 ist in bevorzugten Ausgestaltungsformen wie der hier gezeigten vorgesehen, dass das Arretierteil 4 mittels eines Arretierbolzens 21 zum Arretieren auf den Schließhebel 3 einwirkt. Der Arretierbolzen 21 ist hierzu in diesem Ausführungsbeispiel, wie auch in anderen bevorzugten Ausführungsbeispielen in einem Arretierlangloch 24 verschiebbar gelagert. Bei der hier gezeigten Variante ist der Arretierbolzen 21 am Arretierteil 4, also am Arretierhebel fixiert, während sich das Arretierlangloch 24 im Schließhebel 3 befindet. Dies muss nicht zwingend so sein, auch eine Anordnung andersherum wäre denkbar. Man könnte sogar Ausführungsvarianten realisieren, bei denen sich das Arretierlangloch 24 oder der Arretierbolzen 21 am Betätigungshebel 5 ausgebildet bzw. an diesem fixiert sind.

Im hier gezeigten Ausführungsbeispiel sieht man insbesondere in den Fig. 4, 5 und 7, dass das Arretierlangloch 24 einen gebogenen Abschnitt und einen demgegenüber abgewinkelten Endabschnitt aufweist. Befindet sich wie in Fig. 4, 5 und 7 gezeigt, der Arretierbolzen 21 in dem abgewinkelten Endbereich des Arretierlangloch 24, so arretiert das Arretierteil 4 den Schließhebel 3, sodass dieser nicht aus der Schließstellung gemäß der Fig. 4, 5 und 7 herausgeschwenkt werden kann. Bevorzugt ist in dieser Stellung auch vorgesehen, dass der Arretierbolzen 21 am hakenförmigen Grundkörper 2 abgestützt ist. Auch dies sieht man gut in den Fig. 4, 5 und 7. Erst wenn durch entsprechendes Betätigen des Arretierteils 4, also hier durch ein entsprechendes Verschwenken des Arretierhebels gegen die Vorspannung der zweiten Rückstellfeder 26 der Arretierbolzen 21 in den gebogenen Bereich des Arretierlanglochs 24 überführt wird, kann der Schließhebel 3 mittels des Betätigungshebels 5 von der Schließstellung in die in Fig. 6 dargestellte, maximale Offenstellung verschwenkt werden.

Insbesondere in den Schnittdarstellungen gemäß den Fig. 4 bis 6 sieht man gut, dass dieser Karabinerhaken 1 zusätzlich zum Arretierteil 4 auch noch mit einem Blockierteil 22 ausgerüstet ist. Dieses Blockierteil 22 dient zum Blockieren des Arretierteils 4, wie dies in den Fig. 1 und 4 dargestellt ist. In der vom Blockierteil 22 blockierten Stellung arretiert das Arretierteil 4 den Schließhebel 3 unlösbar in seiner Schließstellung. Erst wenn das Blockierteil 22 in die in den Fig. 2 und 3 sowie 5 und 6 gezeigte Stellung verschoben ist, in der es den Arretierhebel 4 nicht mehr blockiert, kann durch entsprechendes Betätigen des Arretierteils 4 der Schließhebel 3 freigegeben und dann in die maximale Offenstellung geschwenkt werden. Auch wenn dies nicht zwingend notwendig ist, so ist hier in diesem Ausführungsbeispiel das Blockierteil 22 als ein Blockierschieber ausgebildet. Dieser ist verschiebbar am hakenförmigen Grundkörper 2 gelagert. Das Blockierteil 22, also hier der Blockierschieber, kann am hakenförmigen Grundkörper 2 in diesem Ausführungsbeispiel zwischen zwei Endstellungen hin und her bewegt werden. Eine Endstellung ist in den Fig. 1 und 4, die andere Endstellung in den Fig. 2, 3 sowie 5 und 6 gezeigt. Bevorzugt ist, wie hier auch realisiert, vorgesehen, dass das Blockierteil 22 in den Endstellungen einrastet. Im hier gezeigten Ausführungsbeispiel weist das Blockierteil 22 hierzu eine Rastnase auf, die in die entsprechenden Ausnehmungen im hakenförmigen Grundkörper 2 einrasten kann. Entsprechende Rastfunktionen können aber natürlich auch in anderer, an sich bekannter Art und Weise realisiert werden.

Insbesondere in den Schnittdarstellungen gemäß der Fig. 4 bis 6 sieht man auch, dass der hakenförmige Grundkörper 2 in diesem Ausführungsbeispiel in einem an die Aufnahmeöffnung 6 angrenzenden Bereich zumindest bereichsweise mit einer Polymerschicht 23 überzogen ist. Durch diese Polymerschicht 23 kann der Abrieb am hakenförmigen Grundkörper 2 reduziert werden, wenn der Karabinerhaken 1 in ein Stahlseil oder dergleichen eingehängt ist. Außerdem wird mit der Polymerschicht 23 auch eine entsprechende Geräuschreduktion erreicht, wenn der Karabinerhaken 1 in ein Stahlseil eingehängt und an diesem entlang bewegt wird. Die Polymerschicht 23 kann auswechselbar am hakenförmigen Grundkörper 2 befestigt sein, sodass sie bei Verschleiß einfach austauschbar ist.

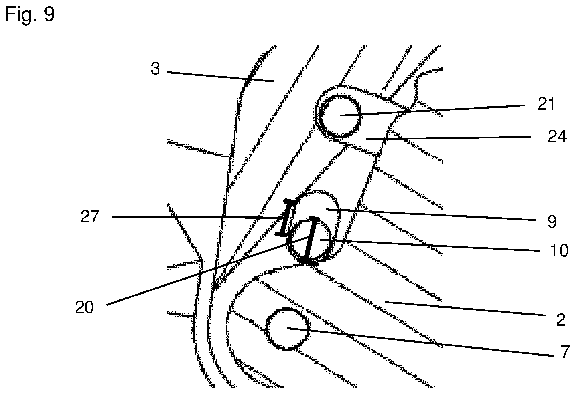

Fig. 9 zeigt nun noch den Bereich um den Betätigungsbolzen 10 im Betätigungslangloch 9 herum, aus Fig. 6 vergrößert. Es ist gut zu sehen, dass der maximale Verschiebeweg 27 des Betätigungsbolzens 10 im Betätigungslangloch 9 in diesem Ausführungsbeispiel sogar kleiner ist als der Durchmesser 20 des Betätigungsbolzens 10 im Betätigungslangloch 9. Beim Schwenken des Schwenkhebels 3 von der Schließstellung in die maximale Offenstellung wird in bevorzugten Ausführungsbeispielen, wie dem hier gezeigten, also der Betätigungsbolzen 10 nur sehr wenig entlang des Betätigungslanglochs 9 bewegt. Es entsteht somit auch relativ wenig Reibung. Dies trägt dazu bei, dass der Schließhebel 3 mittels des Betätigungshebels 5 relativ kraftsparend betätigt werden kann.

**Legende zu den Hinweisziffern:**

| | | | |
|---|---|---|---|
| 1 | Karabinerhaken | 25 | erste Rückstellfeder |
| 2 | hakenförmiger Grundkörper | 26 | zweite Rückstellfeder |
| | | 27 | Verschiebestrecke |
| 3 | Schließhebel | 28 | Betätigungsfläche |
| 4 | Arretierteil | 29 | Betätigungsfläche |
| 5 | Betätigungshebel | | |
| 6 | Aufnahmeöffnung | | |
| 7 | Schließhebelschwenkachse | | |
| 8 | Betätigungshebelschwenkachse | | |
| 9 | Betätigungslangloch | | |
| 10 | Betätigungsbolzen | | |
| 11 | Abstand | | |
| 12 | Abstand | | |
| 13 | Betätigungshebelschwenkwinkel | | |
| 14 | Schließhebelschwenkwinkel | | |
| 15 | erste Seite | | |
| 16 | zweite Seite | | |
| 17 | Längsmittelachse | | |
| 18 | Arretierteilschwenkachse | | |
| 19 | frei auskragendes Ende | | |
| 20 | Durchmesser | | |
| 21 | Arretierbolzen | | |
| 22 | Blockierteil | | |
| 23 | Polymerschicht | | |
| 24 | Arretierlangloch | | |

## Patentansprüche

1. Karabinerhaken (1) mit einem hakenförmigen Grundkörper (2) und einem Schließhebel (3) und einem Arretierteil (4) und einem Betätigungshebel (5), wobei der hakenförmige Grundkörper (2) eine Aufnahmeöffnung (6) des Karabinerhakens (1) teilweise umschließt und der Schließhebel (3) mittels einer Schließhebelschwenkachse (7) zwischen einer Schließstellung und einer maximalen Offenstellung verschwenkbar am hakenförmigen Grundkörper (2) gelagert ist, wobei die Aufnahmeöffnung (6) in der Schließstellung vom Schließhebel (3) nach außen hin verschlossen und in der maximalen Offenstellung maximal nach außen hin geöffnet ist, wobei der Schließhebel (3) vom Arretierteil (4) in der Schließstellung arretierbar ist und der Schließhebel (3) mittels des, am hakenförmigen Grundkörper (2) mittels einer Betätigungshebelschwenkachse (8) schwenkbar gelagerten, Betätigungshebels (5) von der Schließstellung in die maximale Offenstellung verschwenkbar ist und der Betätigungshebel (5) mittels eines in einem Betätigungslangloch (9) geführten Betätigungsbolzens (10) zum Verschwenken auf den Schließhebel (3) einwirkt, **dadurch gekennzeichnet, dass** zumindest in der Schließstellung ein Abstand (11) des Betätigungsbolzens (10) von der Betätigungshebelschwenkachse (8) zumindest dreimal, vorzugsweise zumindest fünfmal, größer ist als ein Abstand (12) des Betätigungsbolzens (10) von der Schließhebelschwenkachse (7).

2. Karabinerhaken (1) nach Anspruch 1, wobei beim Verschwenken des Betätigungshebels (5) um einen Betätigungshebelschwenkwinkel (13) ein dadurch hervorgerufener Schließhebelschwenkwinkel (14) des Schließhebels (3) zumindest sechsmal, vorzugsweise zumindest siebenmal, so groß ist wie der Betätigungshebelschwenkwinkel (13).

3. Karabinerhaken (1) nach Anspruch 1 oder 2, wobei die Betätigungshebelschwenkachse (8) und die Schließhebelschwenkachse (7) auf einer ersten Seite (15) des hakenförmigen Grundkörpers (2) angeordnet sind und das Arretierteil (4) auf einer, der ersten Seite (15) gegenüberliegenden, zweiten Seite (16) des hakenförmigen Grundkörpers (2) am hakenförmigen Grundkörper (2) befestigt ist.

4. Karabinerhaken (1) nach Anspruch 3, wobei der Karabinerhaken (1) in einer Richtung längserstreckt ist und die erste Seite (15) und die zweite Seite (16) bezüglich einer gedachten, in Richtung der Längserstreckung verlaufenden Längsmittelachse (17) einander gegenüber liegen.

5. Karabinerhaken (1) nach einem der Ansprüche 1 bis 4, wobei das Arretierteil (4) ein, am hakenförmigen Grundkörper (2) mittels einer Arretierteilschwenkachse (18) schwenkbar gelagerter Arretierhebel ist.

6. Karabinerhaken (1) nach Anspruch 3 oder 4 und nach Anspruch 5, wobei die Arretierteilschwenkachse (18) auf der zweiten Seite (16) des hakenförmigen Grundkörpers (2) angeordnet ist.

7. Karabinerhaken (1) nach einem der Ansprüche 1 bis 6, wobei der Schließhebel (3) in der Schließstellung an einem frei auskragenden Ende (19) des hakenförmigen Grundkörpers (2) anliegt und die Schließhebelschwenkachse (7) zwischen dem frei auskragenden Ende (19) des hakenförmigen Grundkörpers (2) und der Betätigungshebelschwenkachse (8) angeordnet ist.

8. Karabinerhaken (1) nach einem der Ansprüche 1 bis 7, wobei der Betätigungsbolzen (10) am Betätigungshebel (5) fixiert und das Betätigungslangloch (9) am Schließhebel (3) angeordnet, vorzugsweise ausgebildet, ist.

9. Karabinerhaken (1) nach einem der Ansprüche 1 bis 8, wobei der Betätigungsbolzen (10) einen, in dem Betätigungslangloch (9) gemessenen, Durchmesser (20) aufweist, und eine maximale Verschiebestrecke (27) des Betätigungsbolzens (10) im Betätigungslangloch (9) höchstens zweimal so groß ist wie der Durchmesser (20) des Betätigungsbolzens (10), vorzugsweise kleiner ist als der Durchmesser (20) des Betätigungsbolzens (10).

10. Karabinerhaken (1) nach einem der Ansprüche 1 bis 9, wobei das Arretierteil (4) mittels eines Arretierbolzens (21) zum Arretieren auf den Schließhebel (3) einwirkt, wobei vorzugsweise vorgesehen ist, dass der Arretierbolzen (21) beim Arretieren des Schließhebels (3) am hakenförmigen Grundkörper (2) abgestützt ist.

11. Karabinerhaken (1) nach einem der Ansprüche 1 bis 10, wobei der Karabinerhaken (1) zusätzlich ein Blockierteil (22) zum Blockieren des Arretierteils (4) aufweist, wobei das vom Blockierteil (22) blockierte Arretierteil (4) den Schließhebel (3) in der Schließstellung arretiert.

12. Karabinerhaken (1) nach Anspruch 11, wobei das Blockierteil (22) ein, vorzugsweise am hakenförmigen Grundkörper (2), verschiebbar gelagerter Blockierschieber ist.

13. Karabinerhaken (1) nach Anspruch 11 oder 12, wobei das Blockierteil (22), vorzugsweise am hakenförmigen Grundkörper (2), zwischen zwei Endstellungen hin und her bewegbar gelagert ist.

14. Karabinerhaken (1) nach Anspruch 13, wobei das Blockierteil (22) in den Endstellungen einrastet.

15. Karabinerhaken (1) nach einem der Ansprüche 1 bis 14, wobei der hakenförmige Grundkörper (2) in einem, an die Aufnahmeöffnung (6) angrenzenden Bereich zumindest bereichsweise mit einer Polymerschicht (23) überzogen ist.

## Claims

1. A carabiner hook (1), comprising a hook-shaped main body (2), a closing lever (3),a retaining part (4) and an actuating lever (5), wherein the hook-shaped main body (2) partially surrounds a receiving opening (6) of the carabiner hook (1), and wherein the closing lever (3) is mounted on the hook-shaped main body (2) by a closing lever pivot (7) so as to be pivotable between a closed position and a maximum open position, wherein, in the closed position, the receiving opening (6) is closed with respect to an outside by the closing lever (3) and, in the maximum open position, the receiving opening (6) is opened to the maximum extent with respect to the outside, wherein the closing lever (3) is retainable in the closed position by the retaining part (4), and the closing lever (3) is pivotable from the closed position into the maximum open position by the actuating lever (5), which is mounted pivotably on the hook-shaped main body (2) by an actuating lever pivot (8) and the actuating lever (5) exerts a pivoting action on the closing lever (3) via an actuating pin (10) guided in a slotted actuating hole (9), **characterized in that,** at least in the closed position, a distance (11) between the actuating pin (10) and the actuating lever pivot (8) is at least three times, preferably at least five times, greater than a distance (12) between the actuating pin (10) and the closing lever pivot (7).

2. The carabiner hook (1) according to claim 1, wherein, as the actuating lever (5) pivots through an actuating lever pivoting angle (13), a closing lever pivoting angle (14) of the closing lever (3) which is thereby brought about is at least six times, preferably at least seven times, as great as the actuating lever pivoting angle (13).

3. The carabiner hook (1) according to claim 1 or 2, wherein the actuating lever pivot (8) and the closing lever pivot (7) are arranged on a first side (15) of the hook-shaped main body (2), and the retaining part (4) is secured on the hook-shaped main body (2) on a second side (16) of the hook-shaped main body (2), which is opposite the first side (15).

4. The carabiner hook (1) according to claim 3, wherein the carabiner hook (1) is elongate in one direction, and the first side (15) and the second side (16) lie opposite one another with respect to a longitudinal center line (17) extending in a direction of longitudinal extent.

5. The carabiner hook (1) according to one of the claims 1 to 4, wherein the retaining part (4) is a retaining lever mounted pivotably on the hook-shaped main body (2) by a retaining part pivot (18).

6. The carabiner hook (1) according to one of the claims 3 or 4 and claim 5, wherein the actuating lever pivot (18) is arranged on a second side (16) of the hook-shaped main body (2).

7. The carabiner hook (1) according to one of the claims 1 to 6, wherein in the closed position, the closing lever (3) rests against a freely projecting end (19) of the hook-shaped main body (2), and the closing lever pivot (7) is arranged between the freely projecting end (19) of the hook-shaped main body (2) and the actuating lever pivot (8).

8. The carabiner hook (1) according to one of the claims 1 to 7, wherein the actuating pin (10) is fixed on the actuating lever (5), and the slotted actuating hole (9) is arranged on, preferably formed on, the closing lever (3).

9. The carabiner hook (1) according to one of the claims 1 to 8, wherein the actuating pin (10) has a diameter (20), measured in the slotted actuating hole (9), and a maximum displacement travel (27) of the actuating pin (10) in the slotted actuating hole (9) is no more than twice as great as the diameter (20) of the actuating pin (10), preferably smaller than the diameter (20) of the actuating bolt (10).

10. The carabiner hook (1) according to one of the claims 1 to 9, wherein the retaining part (4) exerts a retaining action on the closing lever (3) via a retaining pin (21), preferably wherein the retaining pin (21) is adapted to be supported on the hook-shaped main body (2) when retaining the closing lever (3).

11. The carabiner hook (1) according to one of the claims 1 to 10, further comprising a blocking part (22) for blocking the retaining part (4), and the retaining part (4) blocked by the blocking part (22) retains the closing lever (3) in the closed position.

12. The carabiner hook (1) according to claim 11, wherein the blocking part (22) is a blocking slide, which is slidably mounted, preferably on the hook-shaped main body (2).

13. The carabiner hook (1) according to one of the claims 11 or 12, wherein the blocking part (22) is mounted, preferably on the hook-shaped main body (2), such that the blocking part (22) is movable backward and forward between two end positions.

14. The carabiner hook (1) according to claim 13, wherein the blocking part (22) latches in the end positions.

15. The carabiner hook (1) according to one of the claims 1 to 14, wherein the hook-shaped main body (2) is covered, at least in some region or regions, with a polymer layer (23) in a region adjoining the receiving opening (6).

## Revendications

1. Mousqueton (1) avec un corps de base (2) en forme de crochet et un levier de fermeture (3) et une pièce d'arrêt (4) et un levier d'actionnement (5), le corps de base (2) en forme de crochet entourant partiellement une ouverture de réception (6) du mousqueton (1), et le levier de fermeture (3) étant monté pivotant sur le corps de base en forme de crochet (2) au moyen d'un axe de pivotement du levier de fermeture (7) entre une position de fermeture et une position d'ouverture maximale, l'ouverture de réception (6) étant, dans la position de fermeture, fermée vers l'extérieur par le levier de fermeture (3), et, dans la position d'ouverture maximale, ouverte vers l'extérieur au maximum, le levier de fermeture (3) pouvant être arrêté dans la position de fermeture par la pièce d'arrêt (4), et le levier de fermeture (3) pouvant être pivoté de la position de fermeture vers la position d'ouverture maximale au moyen du levier d'actionnement (5) monté pivotant sur le corps de base (2) en forme de crochet au moyen d'un axe de pivotement du levier d'actionnement (8), et le levier d'actionnement (5) agissant sur le levier de fermeture (3) pour le faire pivoter au moyen d'un boulon d'actionnement (10) guidé dans une lumière oblongue d'actionnement (9), **caractérisé en ce que,** au moins dans la position de fermeture, une distance (11) du boulon d'actionnement (10) par rapport à l'axe de pivotement du levier d'actionnement (8) est au moins trois fois, de préférence au moins cinq fois, plus grande qu'une distance (12) du boulon d'actionnement (10) par rapport à l'axe de pivotement du levier de fermeture (7).

2. Mousqueton (1) selon la revendication 1, dans lequel, lors du pivotement du levier d'actionnement (5) selon un angle de pivotement du levier d'actionnement (13), un angle de pivotement du levier de fermeture (14) du levier de fermeture (3) provoqué par celui-ci est au moins six fois, de préférence au moins sept fois, plus grand que l'angle de pivotement du levier d'actionnement (13).

3. Mousqueton (1) selon la revendication 1 ou 2, dans lequel l'axe de pivotement du levier d'actionnement (8) et l'axe de pivotement du levier de fermeture (7) sont disposés sur un premier côté (15) du corps de base (2) en forme de crochet, et la pièce d'arrêt (4) est fixée sur le corps de base (2) en forme de crochet sur un deuxième côté (16) du corps de base (2) en forme de crochet opposé au premier côté (15).

4. Mousqueton (1) selon la revendication 3, dans lequel le mousqueton (1) s'étend en longueur dans une direction, et le premier côté (15) et le deuxième côté (16) sont opposés l'un à l'autre par rapport à un axe médian longitudinal (17) imaginaire s'étendant dans la direction de l'extension longitudinale.

5. Mousqueton (1) selon l'une des revendications 1 à 4, dans lequel la pièce d'arrêt (4) est un levier d'arrêt monté pivotant sur le corps de base (2) en forme de crochet au moyen d'un axe de pivotement de la pièce d'arrêt (18).

6. Mousqueton (1) selon la revendication 3 ou 4 et selon la revendication 5, dans lequel l'axe de pivotement de la pièce d'arrêt (18) est disposé sur le deuxième côté (16) du corps de base (2) en forme de crochet.

7. Mousqueton (1) selon l'une des revendications 1 à 6, dans lequel le levier de fermeture (3) vient en appui, dans la position de fermeture, contre une extrémité libre en porte-à-faux (19) du corps de base en forme de crochet (2), et l'axe de pivotement du levier de fermeture (7) est disposé entre l'extrémité libre en porte-à-faux (19) du corps de base en forme de crochet (2) et l'axe de pivotement du levier d'actionnement (8).

8. Mousqueton (1) selon l'une des revendications 1 à 7, dans lequel le boulon d'actionnement (10) est fixé au levier d'actionnement (5), et la lumière oblongue d'actionnement (9) est disposée, de préférence réalisée, sur le levier de fermeture (3).

9. Mousqueton (1) selon l'une des revendications 1 à 8, dans lequel le boulon d'actionnement (10) présente un diamètre (20) mesuré dans la lumière oblongue d'actionnement (9), et une course maximale de déplacement (27) du boulon d'actionnement (10) dans la lumière oblongue d'actionnement (9) est au plus deux fois plus grande que le diamètre (20) du boulon d'actionnement (10), de préférence est inférieure au diamètre (20) du boulon d'actionnement (10).

10. Mousqueton (1) selon l'une des revendications 1 à 9, dans lequel la pièce d'arrêt (4) agit sur le levier de fermeture (3) au moyen d'un boulon d'arrêt (21) pour l'arrêter, le boulon d'arrêt (21), lors de l'arrêt du levier de fermeture (3), étant de préférence appuyé sur le corps de base en forme de crochet (2).

11. Mousqueton (1) selon l'une des revendications 1 à 10, dans lequel le mousqueton (1) présente en outre une pièce de blocage (22) pour bloquer la pièce d'arrêt (4), la pièce d'arrêt (4) bloquée par la pièce de blocage (22) arrêtant le levier de fermeture (3) dans la position de fermeture.

12. Mousqueton (1) selon la revendication 11, dans lequel la pièce de blocage (22) est un coulisseau de blocage monté coulissant, de préférence sur le corps de base en forme de crochet (2).

13. Mousqueton (1) selon la revendication 11 ou 12, dans lequel la pièce de blocage (22) est montée mobile entre deux positions finales, de préférence sur le corps de base en forme de crochet (2).

14. Mousqueton (1) selon la revendication 13, dans lequel la pièce de blocage (22) s'encliquette dans les positions finales.

15. Mousqueton (1) selon l'une des revendications 1 à 14, dans lequel le corps de base en forme de crochet (2) est, au moins dans certaines zones, revêtu d'une couche de polymère (23) dans une région adjacente à l'ouverture de réception (6).
